# EUROPEAN PATENT SPECIFICATION

(11) **EP 2 207 240 B1**
(45) Date of publication and mention of the grant of the patent: **21.08.2013**
(21) Application number: 08865287.0
(22) Date of filing: 27.11.2008
(51) Int. Cl.: G06K 19/07, G06K 19/077, H01Q 1/38, H01Q 7/00, H01Q 23/00

(54) **ANTENNA APPARATUS AND WIRELESS IC DEVICE**
ANTENNENVORRICHTUNG UND DRAHTLOSE IC-VORRICHTUNG
APPAREIL D'ANTENNE ET DISPOSITIF CI SANS FIL

(30) Priority: 26.12.2007 JP 2007334413
(43) Date of publication of application: 14.07.2010
(60) Divisional application: 12191989.8
(73) Proprietor: MURATA MANUFACTURING CO., LTD., Nagaokakyo-shi, Kyoto 617-8555 (JP)
(72) Inventor: TANIGUCHI, Katsumi, Nagaokakyo-shi Kyoto 617-8555 (JP); SASAKI, Jun, Nagaokakyo-shi Kyoto 617-8555 (JP); KATO, Noboru, Nagaokakyo-shi Kyoto 617-8555 (JP)
(74) Representative: Schenk, Markus
(86) International application number: PCT/JP2008/071502
(87) International publication number: WO 2009/081683

(56) References cited:
- WO-A1-98/40846
- WO-A1-2007/125683
- WO-A1-2007/138857
- DE-A1- 10 258 670
- JP-A- 2001 101 371
- JP-A- 2002 007 985
- JP-A- 2003 332 820
- JP-A- 2004 253 858
- JP-A- 2005 129 019
- JP-A- 2005 284 352
- US-A- 5 680 106
- US-A1- 2003 178 483
- US-A1- 2006 158 316
- US-A1- 2008 218 344

## Description

### Technical Field

The present invention relates to an antenna device used in a wireless IC device such as an RF-ID module that performs contactless communication by using a near-field electromagnetic field, and a wireless IC device including the same.

### Background Art

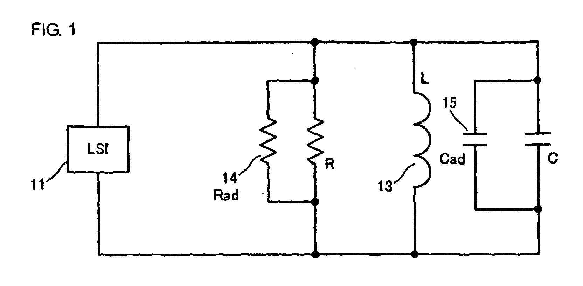

A contactless IC card used as an RF-ID module is disclosed in JP 2001-010264.
An equivalent circuit of such a card is illustrated in Fig. 1. The contactless IC card is a contactless IC card that performs contactless communication with a reader/writer. For a wireless IC chip 11, a parallel resonant circuit is formed by an inductance L constituted by an antenna coil 13, a resistance R of the entire circuit, an adjustment resistor 14, an electrostatic capacitance C of the entire circuit, such as a capacitance inside the IC chip or a stray capacitance generated in the circuit, and an adjustment capacitor capacitance Cad.

By adjusting a resistance value Rad of the adjustment resistor 14 in the resonant circuit, the degree of sharpness (Q) of the resonant circuit is adjusted. Using the capacitance Cad of an adjustment capacitor 15, the resonant frequency is adjusted, thereby securing a good communication state.

### Disclosure of Invention

### Problems to be Solved by the Invention

When such an IC card is to perform communication with a reader/writer, antenna coils included in the IC card and the reader/writer are mutually coupled. Therefore, when the IC card and the reader/writer are close to each other, the inductance values of the antenna coils change. When the inductance values of the antenna coils change, this causes changes in resonant frequencies of resonant circuits including the antenna coils, thereby causing significant fluctuations of a radiation gain.

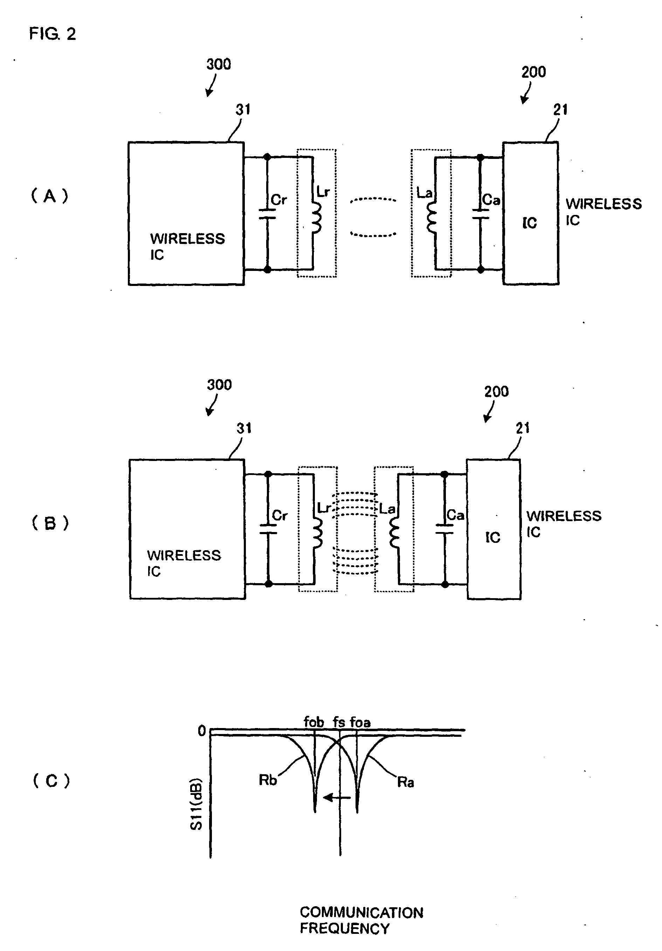

Fig. 2 illustrates the foregoing manner. Here, in a reader/writer 300, a resonant circuit is constituted by an antenna coil Lr and a capacitor Cr. In a wireless IC device 200, a resonant circuit is constituted by an antenna coil La and a capacitor Ca, to which a wireless IC 21 is connected.

An S11 characteristic (return loss) of an S-parameter, which is in the case where the antenna device is viewed from the wireless IC 21 of the wireless IC device 200, is maximized at a frequency foa when the wireless IC device 200 is appropriately distant from the reader/writer 300, as indicated by a characteristic curve Ra in Fig. 2(C).

In contrast, as illustrated in Fig. 2(B), when the wireless IC device 200 is excessively close to the reader/writer 300, the antenna coil La on the wireless IC device 200 side and the antenna coil Lr on the reader/writer 300 side are magnetically coupled to each other, whereby the inductances of the antenna coils La and Lr increase. Therefore, as indicated by a characteristic curve Rb in Fig. 2(C), the return loss is maximized at a frequency fob, which is lower than the foregoing frequency foa.

As above, in a state where the antenna of the wireless IC device 200 and the antenna of the reader/writer 300 are coupled to each other using a near-field electromagnetic field, the closer the two devices get, the more the resonant frequencies of the antennas of the two devices are shifted to lower frequencies. When the resonant frequencies of the antennas become lower than a communication frequency (fs indicated in Fig. 2(C)) of the actual wireless IC device 200, the antenna coils stop functioning as inductors. Thus, the antenna gain is significantly reduced, and accordingly, no communication can be performed.

Therefore, it has conventionally been necessary to set in advance the resonant frequency of an antenna device to a frequency that is, for example, 10% to 20% higher than the communication frequency, so that the resonant frequency would not become lower than the communication frequency even when the resonant frequency is shifted to a lower frequency side. In order to perform communication even in a state where the resonant frequency is higher than the communication frequency, as illustrated in Fig. 1, a resistor is provided in a resonant circuit including an antenna coil in order to dare to reduce the Q-value of the resonant circuit.

However, with the condition that communication can be performed even in a state where the wireless IC device 200 is excessively close to the reader/writer, the resonant frequencies of the antennas at an average distance are shifted to a frequency side higher than the communication frequency. If the resonant frequencies become further distant from the communication frequency, the antenna gain is significantly reduced. As a result, a sufficient communication distance cannot be secured.

When the Q-values of the resonant circuits including the antenna coils are reduced, because of broad characteristics of the resonant circuits, a relatively stable gain can be achieved even when the resonant frequencies are shifted. However, because the Q-values are reduced, the gain is inevitably reduced at any distance between the wireless IC device and the reader/writer.

JP 2001 101 371 discloses a non-contact IC card provided with a first resonance circuit having a first external communication coil and a first capacitor part. Inside this, a second resonance circuit having a second communication coil and a second capacitor part connected to the coil and a non- contact IC module having an internal communication coil and an IC chip connected to the coil are arranged in parallel. Thus, the card operates with a frequency close to a communication frequency both at the time of a single card and at the time of piling plural cards to improve receiving efficiency.

US 2003/0178483 discloses an IC card, in which an output of a resonant circuit which electromagnetically couples with an external communications apparatus is rectified and taken out, wherein a resultant output voltage is monitored by a switch control circuit. After the output voltage has risen to or beyond a threshold, a switch element is turned on and off, and a state of the switch element in which the output voltage becomes higher is determined. While holding the switch element in the state thus determined, a power supply switch element is turned on when the output voltage has further risen. As a result, even when a plurality of noncontact IC cards overlaid with one another are brought close to the communications apparatus, the individual noncontact IC cards can carry out data communication.

US 2006/0158316 teaches a multiple frequency detection system allowing the seamless integration of an almost ideal EAS function with an RFID function. EAS technology at, for example, 8.2 MHz or 14 MHz, and RFID technology at, for example, 13.56 MHz are integrated in a common antenna package. Resonance circuits adapted accordingly are provided.

EP 2009738 is relevant under Art. 54 (3) EPC and discloses an RFID antenna structure with several resonant circuits.

It is an object of the present invention to provide a wireless IC device in which characteristic fluctuations due to changes in the distance between the wireless IC device and a reader/writer are suppressed, and the wireless IC device which can perform communication with high reliability.

### Means for Solving the Problems

This object is achieved by a device according to claim 1.

According to this structure, for example, by defining the resonant frequency of the additional resonant circuit to be lower than the resonant frequency of the antenna resonant circuit, even when the wireless IC device becomes close to an external device such as a reader/writer, antenna coils of the wireless IC device and the external device are magnetically coupled to each other and accordingly inductance values are increased, a decrease in the resonant frequency of the antenna resonant circuit can be suppressed by using the resonant frequency of the additional frequency circuit. Therefore, changes in the resonant frequency of the antenna resonant circuit become small, and a high gain can be achieved in a stable manner.

Alternatively, the resonant frequency of the additional resonant circuit is set to be higher than the resonant frequency of the antenna resonant circuit, whereby the resonant frequency of the antenna resonant circuit is set to be higher than the communication frequency even in a state where the wireless IC device and the external device are excessively close to each other. Accordingly, even when the wireless IC device becomes distant from the reader/writer (external device), an increase in the resonant frequency of the antenna resonant circuit (becoming closer to the resonant frequency of the additional resonant circuit) is suppressed. Thus, fluctuations in the resonant frequency of the antenna resonant circuit can be suppressed, and the resonant frequency of the antenna resonant circuit can be maintained close to the communication frequency over a wide communication distance.

The antenna coil may be magnetically coupled to the inductor included in the additional resonant circuit. Accordingly, even when the resonant frequency of the antenna resonant circuit becomes close to the resonant frequency of the additional resonant circuit due to an increase in the inductance, the resonant frequency of the antenna resonant circuit does not easily become lower than the resonant frequency of the additional resonant circuit, thereby improving the stability of the resonant frequency of the antenna resonant circuit.

The additional resonant circuit is, for example, a parallel resonant circuit. Accordingly, the inductance value of the additional resonant circuit can be reduced, thereby achieving size reduction.

The antenna resonant circuit and the additional resonant circuit are connected in series to each other, for example. Accordingly, the antenna coil of the antenna resonant circuit and the inductor of the additional resonant circuit can be more easily magnetically coupled to each other.

In particular, the resonant frequency of the antenna resonant circuit is defined to be higher than a communication frequency of the wireless IC device, and the resonant frequency of the additional resonant circuit is defined to be lower than the communication frequency. Accordingly, the closer the wireless IC device including the antenna device gets to the external device, the closer the resonant frequency of the antenna resonant circuit gets to the communication frequency, whereby a higher gain can be achieved.

Inductors included in the additional resonant circuits may include, for example, two adjacent lines having different lengths.

According to this structure, the resonant frequency band of the additional resonant circuits can be widened, and the effect of suppressing, using the additional resonant circuits, fluctuations in the resonant frequency of the antenna resonant circuit can be enhanced.

The inductor included in the additional resonant circuit may be magnetically shielded. Accordingly, even when the wireless IC device including the antenna device becomes close to the external device, such as a reader/writer, the magnetic coupling with an antenna coil on the external device side is suppressed. Thus, the inductance value of the inductor of the additional resonant circuit changes only minimally, and the resonant frequency of the additional resonant circuit can be maintained stable. As a result, the resonant frequency of the antenna resonant circuit can be made more stable.

The additional resonant circuit may be provided in a multilayer substrate including a magnetic substance. Accordingly, the overall structure can be made thin, and an increase in size caused by providing the additional resonant circuit can be prevented. Also, magnetic shielding can be performed at the same time.

An output-section inductor may be connected in series to an input section for a sending signal input from the wireless IC, and the output-section inductor may be provided in the multilayer substrate. Accordingly, an impedance matching circuit for the wireless IC and the antenna device can be provided at the same time in the multilayer substrate, and the overall structure can be made smaller.

A capacitance component of the additional resonant circuit may be constituted by a chip capacitor, and the chip capacitor may be placed on a surface or in an interior of the multilayer substrate. Accordingly, the multilayer substrate can be made smaller, and the area of the wireless IC device occupied by the multilayer substrate can be reduced.

A wireless IC device according to the present invention includes an antenna device including the foregoing multilayer substrate, and a wireless IC placed on a surface or in an interior of the multilayer substrate.
Accordingly, a module also including the wireless IC chip (RF-ID module) can be constituted, which can be easily incorporated into the wireless IC device.

### Advantages

According to the present invention, even when a wireless IC device becomes close to an external device such as a reader/writer, antenna coils of the wireless IC device and the external device are magnetically coupled to each other and accordingly inductance values are increased, a decrease in the resonant frequency of an antenna resonant circuit can be suppressed by using the resonant frequency of an additional frequency circuit. Therefore, changes in the resonant frequency of the antenna resonant circuit become small, and a high gain can be achieved in a stable manner.

Conversely, since fluctuations in the resonant frequency of the antenna resonant circuit at the time the wireless IC device becomes distant from the external device can be suppressed, the resonant frequency of the antenna resonant circuit can be maintained close to the communication frequency over a wide communication distance.

### Brief Description of Drawings

Fig. 1 is a circuit diagram of a contactless IC card described in Patent Document 1.
Fig. 2 includes diagrams for describing problems of a known wireless IC device.
Fig. 3 is a circuit diagram illustrating the structure of a wireless IC device and an antenna device according to a first embodiment.
Fig. 4 includes diagrams illustrating an S11 characteristic (return loss) at the time the distance between the wireless IC device according to the first embodiment and a reader/writer changes.
Fig. 5 includes diagrams illustrating an S11 characteristic (return loss) at the time the distance between a wireless IC device according to a comparative example of the first embodiment and a reader/writer changes.
Fig. 6 includes diagrams illustrating the relationship between a decrease in the resonant frequency, which is due to magnetic coupling between an antenna resonant circuit and an antenna on the reader/writer side, and the resonant frequency of an additional resonant circuit.
Fig. 7 includes diagrams illustrating an impedance locus of the antenna device at the time the frequency is changed in a state where the distance between the wireless IC device according to the first embodiment and the reader/writer is different.
Fig. 8 includes diagrams illustrating an impedance locus of the antenna device at the time the frequency is changed in a state where the distance between the wireless IC device according to the comparative example of the first embodiment and the reader/writer is different.
Fig. 9 includes diagrams illustrating an S11 characteristic of an antenna device provided in a wireless IC device according to a second embodiment, which is based on a change in the distance between the wireless IC device and the reader/writer.
Fig. 10 includes diagrams illustrating the structure of a wireless IC device according to a third embodiment.
Fig. 11 is a diagram illustrating an example of an unbalanced antenna device and an example of the wireless IC device according to the third embodiment.
Fig. 12 is a circuit diagram of an antenna device and a wireless IC device including the same, according to a fourth embodiment.
Fig. 13 is a diagram illustrating an S11 characteristic of the antenna device according to the fourth embodiment.
Fig. 14 includes diagrams illustrating the structure of a wireless IC device according to a fifth embodiment.
Fig. 15 is a circuit diagram illustrating the structure of a wireless IC device and an antenna device included in the wireless IC device, according to a sixth embodiment.
Fig. 16 includes diagrams illustrating the structure of a module and the structure of the entire wireless IC device, according to the sixth embodiment.

### Reference Numerals

- 21, 31: wireless ICs
- 22, 23: modules
- 23a: upper layers of multilayer substrate
- 23b: lower layers of multilayer substrate
- 101-108: antenna devices
- 200, 201, 207, 208: wireless IC devices
- 300: reader/writer
- La: antenna coil
- Ca: capacitor
- L1, L2: inductors
- L3, L4: output-section inductors
- C1, C2: capacitors
- AR: antenna resonant circuit
- LC1: additional resonant circuit (first additional resonant circuit)
- LC2: second additional resonant circuit
- SL1, SL2: lines

### Best Modes for Carrying Out the Invention

### <<First Embodiment>>

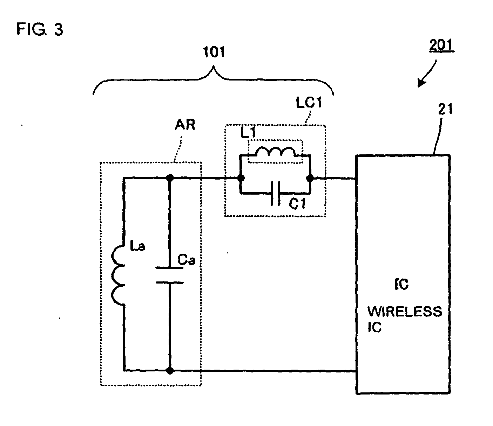

Fig. 3 is a circuit diagram of a wireless IC device 201 according to a first embodiment. In Fig. 3, an antenna coil La and a capacitor Ca constitute an antenna resonant circuit AR. Also, a parallel resonant circuit including an inductor L1 and a capacitor C1 constitutes an additional resonant circuit LC1. The additional resonant circuit LC1 is connected in series to the antenna resonant circuit AR and is connected to a wireless IC 21.

The antenna resonant circuit AR and the additional resonant circuit LC1 constitute an antenna device 101. The antenna device 101 and the wireless IC 21 constitute the wireless IC device 201.

The wireless IC device 201 is, for example, an RF-ID card. The antenna coil La is constituted by a winding conductor pattern having multiple turns along a card periphery portion in the interior of the card. The capacitor Ca is constituted by electrodes facing each other across a dielectric layer. The inductor L1 and the capacitor C1 are provided on a ferrite multilayer substrate. The ferrite multilayer substrate and the wireless IC 21 are enclosed in the card, thereby constituting a single RF-ID card.

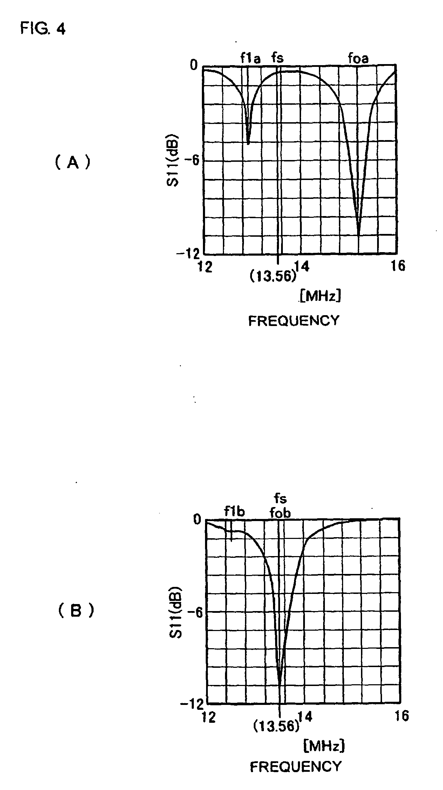

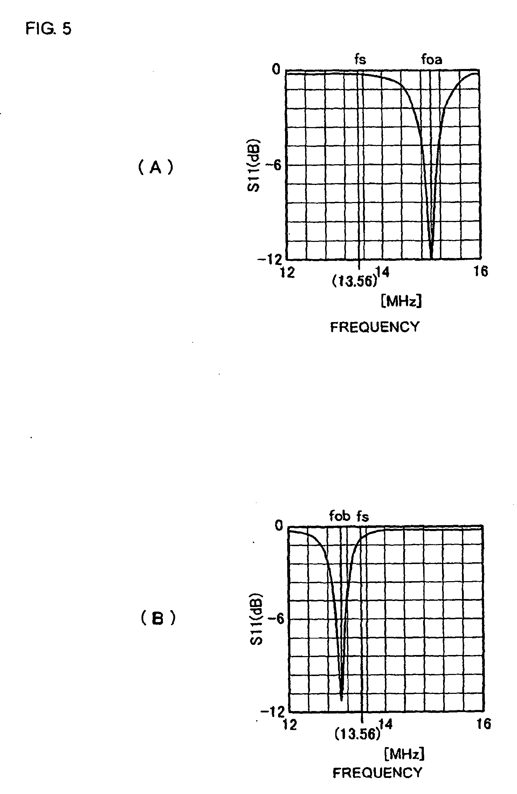

Fig. 4 includes diagrams illustrating an antenna characteristic of the antenna device 101 illustrated in Fig. 3. Fig. 5 includes diagrams illustrating an antenna characteristic in the case where the additional resonant circuit LC1 is not provided. Here, an S11 characteristic (return loss) of an S-parameter is illustrated.

In Figs. 4 and 5, (A) illustrates a characteristic in a normal state where the wireless IC device 201 is appropriately distant from a reader/writer, and (B) illustrates a characteristic in a state where the wireless IC device 201 and the reader/writer are excessively close to each other.

In the case where the additional resonant circuit LC1 illustrated in Fig. 3 is absent, in a normal state where the wireless IC device is appropriately distant from the reader/writer, as illustrated in Fig. 5(A), a resonant frequency foa of the antenna resonant circuit AR is about 15.0 MHz, which is set to be higher than a communication frequency fs (13.56 HMz). As above, since the resonant frequency foa of the antenna resonant circuit AR is higher than the communication frequency fs, the antenna device of the wireless IC device and an antenna of the reader/writer are magnetically coupled to each other, whereby the wireless IC device and the reader/writer can communicate with each other.

In a state where the wireless IC device and the reader/writer are excessively close to each other, as illustrated in Fig. 5(B), a resonant frequency fob of the antenna resonant circuit AR is lower than the communication frequency fs, and the antenna device of the wireless IC device and the antenna on the reader/writer side are capacitively coupled to each other. Thus, no magnetic coupling can be established using the antenna coil of the antenna resonant circuit (no current flows through the antenna coil), and accordingly, no communication can be performed.

In contrast, according to the antenna device 101 of the first embodiment, in the normal state, as illustrated in Fig. 4(A), a resonant frequency f1a of the additional resonant circuit LC1 is about 12.9 MHz, and the resonant frequency foa of the antenna resonant circuit AR is about 15.2 MHz. This frequency foa is higher than the communication frequency 13.56 MHz, and the frequencies are relatively close to each other. Therefore, the wireless IC device 201 can communicate with the reader/writer.

In a state where the wireless IC device 201 is excessively close to the reader/writer, as illustrated in Fig. 4(B), the resonant frequency fob of the antenna resonant circuit is 13.56 MHz, which is substantially equal to the communication frequency fs. Therefore, the antenna device 101 of the wireless IC device 201 and the antenna on the reader/writer side are strongly magnetically coupled to each other. Therefore, communication can be normally performed.

As illustrated in Fig. 4(B), a resonant frequency f1b of the additional resonant circuit LC1 is shifted to a lower frequency side in accordance with a decrease in the resonant frequency fob of the antenna resonant circuit AR.

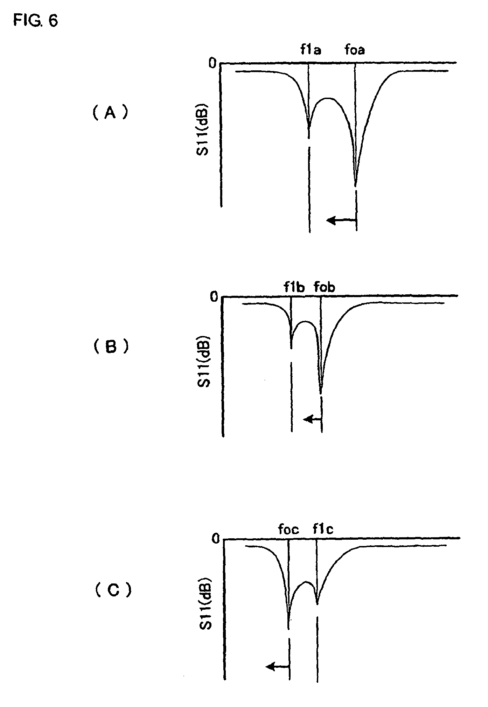

Next, the relationship between a decrease in the resonant frequency, which is due to magnetic coupling between the antenna resonant circuit AR and the antenna on the reader/writer side, and the resonant frequency of the additional resonant circuit LC1 will be described using Fig. 6.
In a state where the wireless IC device 201 is the most distant from the reader/writer while the wireless IC device 201 and the reader/writer can communicate with each other, as illustrated in Fig. 6(A), the resonant frequency foa of the antenna resonant circuit AR is higher than the resonant frequency f1a of the additional resonant circuit LC1, and the frequencies foa and f1a are relatively distant from each other.

As the wireless IC device 201 becomes closer to the reader/writer, as illustrated in Fig. 6(B), the resonant frequency fob of the antenna resonant circuit becomes lower than the resonant frequency foa of the antenna resonant circuit AR. Accordingly, the resonant frequency f1b of the additional resonant circuit LC1 is slightly shifted to a lower frequency side relative to the foregoing foa. This amount of shift is smaller than the amount of shift (foa-fob) of the resonant frequency of the antenna resonant circuit AR.

As above, the additional resonant circuit LC1 suppresses a decrease in the resonant frequency of the antenna resonant circuit AR so that the resonant frequency of the antenna resonant circuit AR will not become lower than the resonant frequency f1b of the additional resonant circuit LC1.

If the antenna coil La of the antenna device 101 of the wireless IC device 201 is to more strongly magnetically coupled to an antenna coil of the antenna on the reader/writer side and accordingly the resonant frequency of the antenna resonant circuit is to be further reduced, as indicated by foc in Fig. 6(C), the resonant frequency of the antenna resonant circuit is shifted to a frequency side lower than a resonant frequency f1c of the additional resonant circuit LC1. In other words, the additional resonant circuit LC1 prevents the resonant frequency of the antenna resonant circuit from becoming lower than the resonant frequency of the additional resonant circuit LC1. Therefore, the resonant frequency of the additional resonant circuit LC1 is defined within a range in which the resonant frequency of the antenna resonant circuit AR does not become lower than the resonant frequency of the additional resonant circuit LC1. That is, even in a state where the wireless IC device is the closest to the reader/writer, the resonant frequency of the additional resonant circuit LC1 itself is defined so as to prevent the state illustrated in Fig. 6(C).

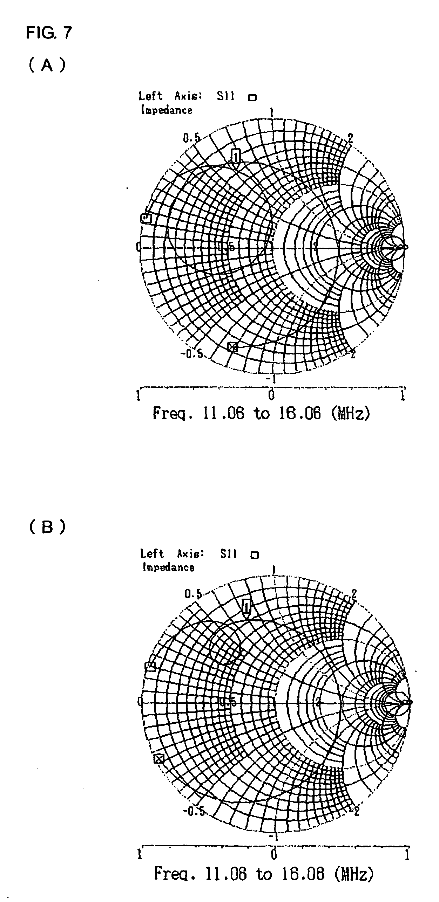

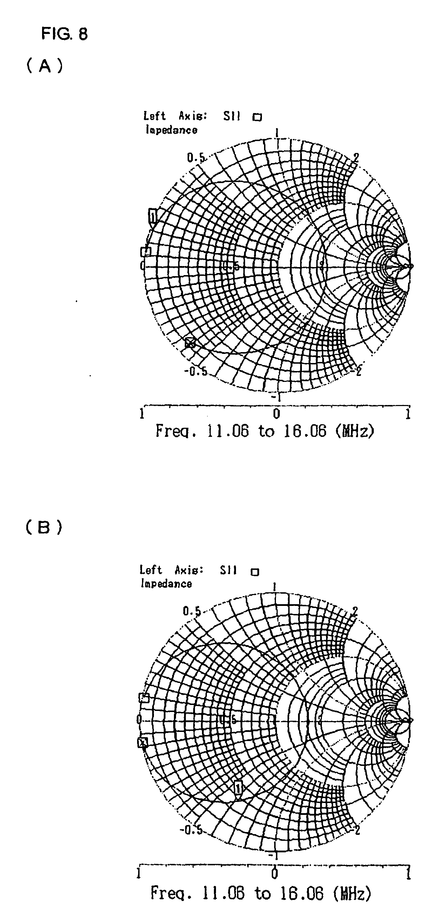

Figs. 7 and 8 illustrate, on a Smith chart, an impedance change relative to a frequency change in the case of the antenna device 101 used in the wireless IC device according to the first embodiment, which is illustrated in Fig. 3, and the case where the additional resonant circuit LC1 is not provided.

Fig. 7 illustrates a characteristic of the antenna device 101 illustrated in Fig. 3. Fig. 8 illustrates a characteristic in the case where the additional resonant circuit LC1 is not provided. Also in Figs. 7 and 8, (A) illustrates a characteristic in a normal state where the wireless IC device 201 is appropriately distant from the reader/writer, and (B) illustrates a characteristic in a state where the wireless IC device 201 and the reader/writer are excessively close to each other. In all of these cases, the frequency is changed within the range of 11.06 to 16.06 MHz. Also, the impedance at the communication frequency 13.56 MHz is indicated by a marker [1] in the diagrams.

When the additional resonant circuit LC1 is not provided, as illustrated in Fig. 8, in a state where the wireless IC device is excessively close to the reader/writer, the impedance at the communication frequency 13.56 MHz (marker position [1] in the diagram) exists in a lower half area of the Smith chart. That is, the antennas of the wireless IC device and the reader/writer are capacitively coupled. No current flows through the antenna coil La of the antenna device, and accordingly, no communication can be performed.

In contrast, in the antenna device 101 according to the first embodiment, even when the wireless IC device is appropriately distant from or excessively close to the reader/writer, the impedance at the communication frequency 13.56 MHz (marker position [1] in the diagram) exists in an upper half area of the Smith chart. That is, there is inductivity, and it is clear that the antennas of the wireless IC device and the reader/writer are magnetically coupled to each other.

As above, the wireless IC device 201 can communicate with the reader/writer in a stable manner even when there are changes in the distance between the wireless IC device 201 and the reader/writer.

Alternatively, the antenna coil La illustrated in Fig. 3 may be magnetically coupled to the inductor L1 of the additional resonant circuit LC1. In this way, the amount of shift of the resonant frequency of the antenna resonant circuit AR toward the resonant frequency of the additional resonant circuit LC1 can be more effectively suppressed, and the resonant frequency of the antenna resonant circuit AR can be made more stable.

### «Second Embodiment»

In the first embodiment, the resonant frequency of the antenna resonant circuit AR is set to be higher than the communication frequency fs, and the resonant frequency of the additional resonant circuit LC1 is set to be lower than the resonant frequency of the antenna resonant circuit AR. In a second embodiment, an example where the resonant frequency of the additional resonant circuit LC1 is set to be higher than the resonant frequency of the antenna resonant circuit AR will be described.

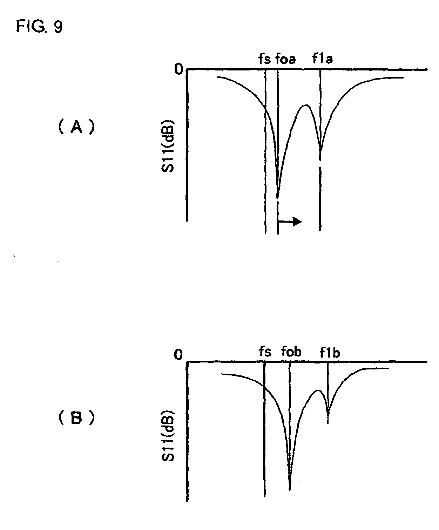

Fig. 9 illustrates an S11 characteristic of the antenna device provided in the wireless IC device, which is based on a change in the distance between the wireless IC device and the reader/writer.
Fig. 9(A) illustrates a characteristic in a state where the wireless IC device is excessively close to the reader/writer. Even in this state, the resonant frequency foa of the antenna resonant circuit is set to be higher than the communication frequency fs.

When the wireless IC device becomes appropriately distant from the reader/writer, the magnetic coupling between the antennas of the wireless IC device and the reader/writer becomes weaker. Accordingly, as illustrated in Fig. 9(B), the inductance of the antenna coil of the antenna resonant circuit becomes smaller, and the resonant frequency fob is increased. However, since the resonant frequency f1b of the additional resonant circuit functions to suppress an increase in the resonant frequency fob of the antenna resonant circuit, the resonant frequency fob of the antenna resonant circuit does not become extremely higher than the communication frequency fs.

As above, the wireless IC device can communicate with the reader/writer in a stable manner even when there are changes in the distance between the wireless IC device and the reader/writer.

### «Third Embodiment»

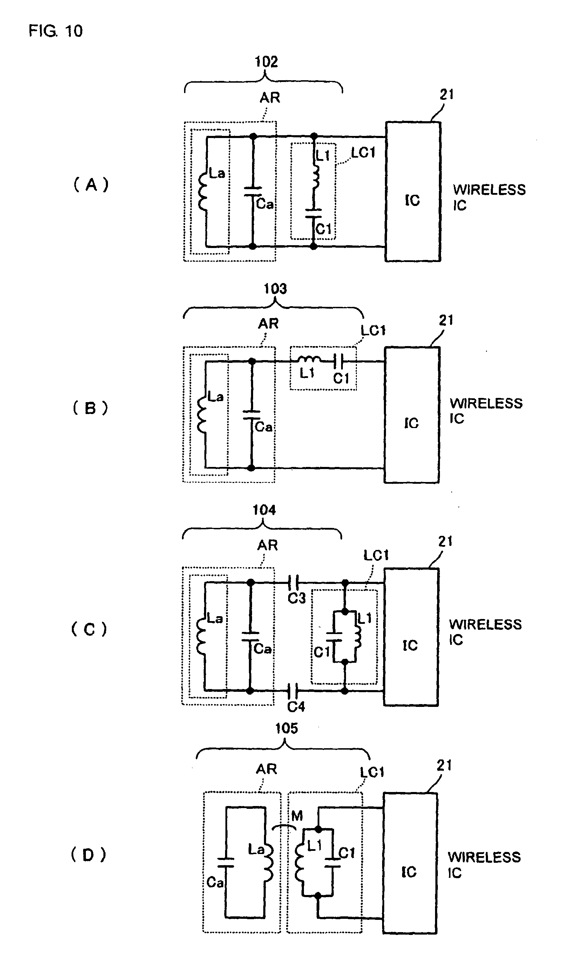

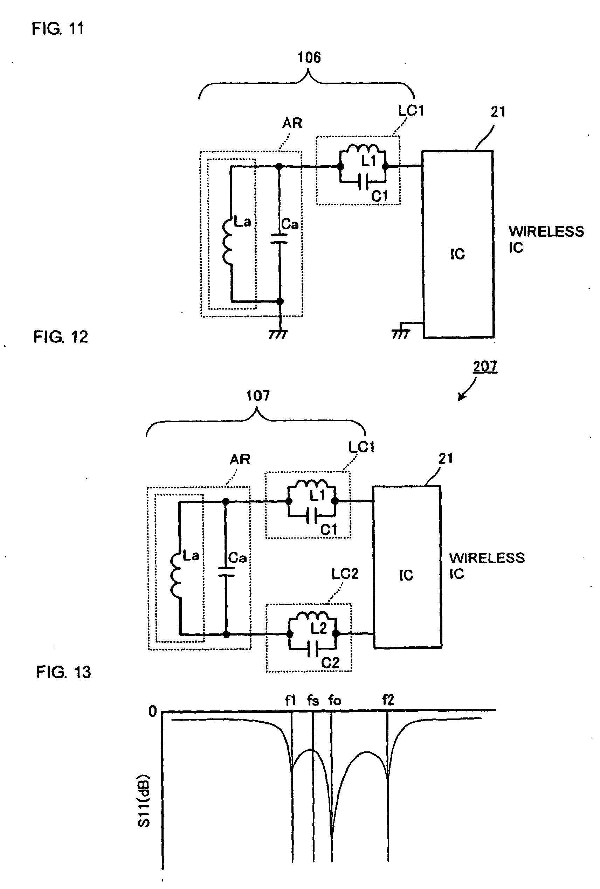

Next, a few examples of the structure of the additional resonant circuit will be described, as a third embodiment, with reference to Figs. 10 and 11.

In the example in Fig. 10(A), the additional resonant circuit LC1 constituted by a series circuit including the inductor L1 and the capacitor C1 is connected in parallel to the antenna resonant circuit AR, thereby constituting an antenna device 102.

In the example in Fig. 10(B), the additional resonant circuit LC1 constituted by a series circuit including the inductor L1 and the capacitor C1 is connected in series to the antenna resonant circuit AR, thereby constituting an antenna device 103.

In the example in Fig. 10(C), the additional resonant circuit LC1 constituted by a parallel circuit including the inductor L1 and the capacitor C1 is connected in parallel to the antenna resonant circuit AR via capacitors C3 and C4, thereby constituting an antenna device 104.
The additional resonant circuit LC1 described in these examples may be provided in a plurality.

In the example in Fig. 10(D), the antenna resonant circuit AR is constituted by a parallel circuit including the antenna coil La and the capacitor Ca, and the additional resonant circuit LC1 is constituted by a parallel circuit including the inductor L1 and the capacitor C1. The additional resonant circuit LC1 is connected to the wireless IC 21. The antenna coil La is placed so as to be magnetically coupled to the inductor L1, thereby constituting an antenna device 105. As above, the antenna resonant circuit AR and the additional resonant circuit LC1 may be inductively coupled to each other.

Alternatively, also in the structures in Fig. 10(A) to (C), the antenna coil La may be magnetically coupled to the inductor L1 of the additional resonant circuit LC1. In this way, as described above, the amount of shift of the resonant frequency of the antenna resonant circuit AR toward the resonant frequency of the additional resonant circuit LC1 can be more effectively suppressed, and the resonant frequency of the antenna resonant circuit AR can be made more stable.

In these examples described above, in accordance with the fact that the wireless IC 21 inputs/outputs signals in a balanced manner, the antenna device is constituted by a balanced type antenna device. Alternatively, in the example illustrated in Fig. 11, the wireless IC 21 inputs/outputs signals in an unbalanced manner, and an antenna device 106 is constituted by an unbalanced type antenna device. In this example, the additional resonant circuit LC1 including the inductor L1 and the capacitor C1, which are connected in parallel to each other, is connected in series to the antenna resonant circuit AR. As in the case of the balanced type, the structure of the additional resonant circuit LC1 and the connection structure of the antenna resonant circuit AR are not limited to the foregoing. For example, one line in Fig. 10A may be grounded.

### <<Fourth Embodiment>>

A fourth embodiment is an example in which the stability of the resonant frequency of the antenna resonant circuit is enhanced by providing two additional resonant circuits.

Fig. 12 is a circuit diagram of an antenna device 107 and a wireless IC device 207 including the same, according to the fourth embodiment. In this example, a first additional resonant circuit LC1 constituted by a parallel circuit including the inductor L1 and the capacitor C1 and a second additional resonant circuit LC2 constituted by a parallel circuit similarly including an inductor L2 and a capacitor C2 are connected in series to the antenna resonant circuit AR. Accordingly, the antenna device 107 is constituted.

Fig. 13 is a diagram illustrating an S11 characteristic of the antenna device 107 illustrated in Fig. 12. A resonant frequency f1 of the first additional resonant circuit LC1 is defined to be lower than a resonant frequency fo of the antenna resonant circuit AR. A resonant frequency f2 of the second additional resonant circuit LC2 is defined to be higher than the resonant frequency fo of the antenna resonant circuit. The resonant frequency fo of the antenna resonant circuit AR is set to be higher than the communication frequency fs.

The closer the wireless IC device according to the fourth embodiment gets to the reader/writer, the more the resonant frequency fo of the antenna resonant circuit is reduced. However, with the operation of the first additional resonant circuit LC1, the amount of shift to a lower frequency side can be suppressed. The frequencies fo and f1 are defined so that fo will not become lower than the communication frequency fs even in a state where the wireless IC device becomes excessively close to the reader/writer. When the wireless IC device becomes distant from the reader/writer, the resonant frequency fo of the antenna resonant circuit is shifted to a higher frequency side. However, with the operation of the second additional resonant circuit LC2, the amount of shift is suppressed. Thus, the resonant frequency fo of the antenna resonant circuit AR can be set to be near the communication frequency fs, regardless of the distance between the wireless IC device and the reader/writer.
As above, when at least two additional resonant circuits are provided, the resonant frequency of the antenna resonant circuit can be made stable relative to both high and low frequency directions.

As another example, both the resonant frequencies of the two additional resonant circuits may exist in a frequency side lower than or higher than the resonant frequency of the antenna resonant circuit. Accordingly, compared with the case where there is only one additional resonant circuit, the stability of the resonant frequency of the antenna resonant circuit can be enhanced.

In the circuit structures illustrated in Fig. 10, similarly, two or more additional resonant circuits may be provided.

### <<Fifth Embodiment>>

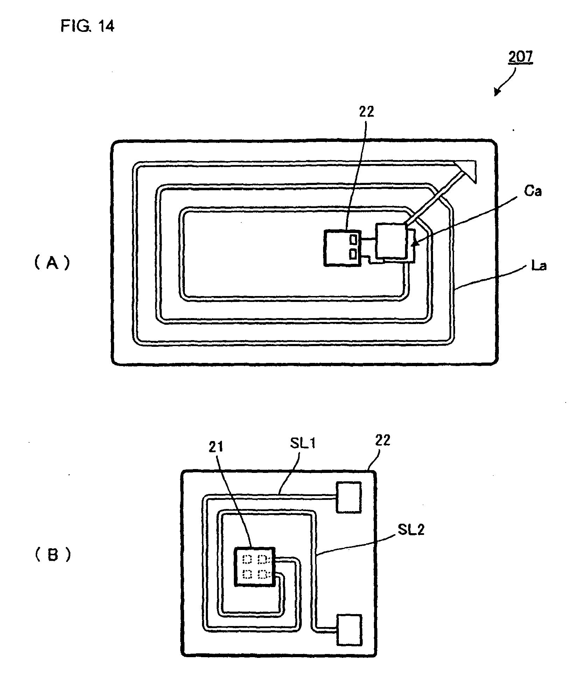

Fig. 14 includes diagrams illustrating the structure of the wireless IC device 207 according to a fifth embodiment. In this example, the wireless IC device 207 is an RF-ID card. Fig. 14(A) illustrates the structure of the interior of the card. Fig. 14(B) is a magnified view of a module 22 included in the wireless IC device 207.

The antenna coil La is constituted by a winding conductor pattern having multiple turns along a card periphery portion in the interior of the card. The capacitor Ca is constituted by electrodes facing each other across a dielectric layer.

In the module 22, two lines SL1 and SL2 that have different lengths and that are adjacent to each other are provided, and the wireless IC (chip) 21 is provided.

With the two lines SL1 and SL2 provided in the module 22, a capacitance is generated between the lines. Two additional resonant circuits are constituted by this capacitance and the inductances of the lines SL1 and SL2. Thus, when the circuit of the wireless IC device 207 is equivalently represented using a lumped-constant circuit, the circuit becomes similar to that illustrated in Fig. 12 according to the fourth embodiment. Since the two lines SL1 and SL2 have different lengths, the resonant frequencies of the two additional resonant circuits can be made different.

### <<Sixth Embodiment>>

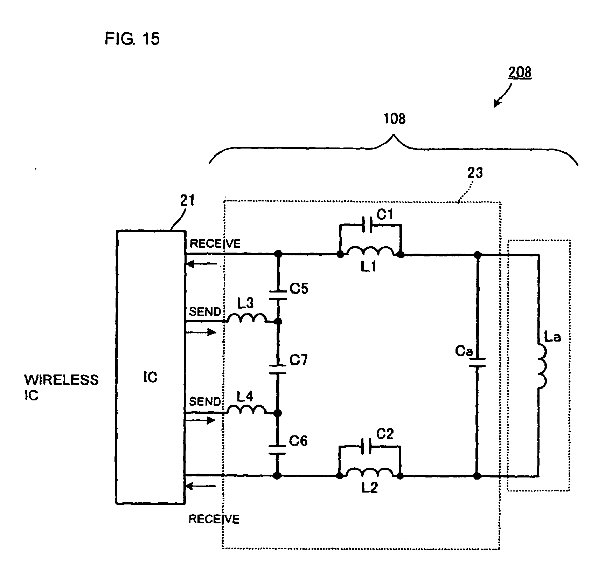

Fig. 15 is a circuit diagram illustrating the structure of a wireless IC device 208 and an antenna device 108 included in the wireless IC device 208, according to a sixth embodiment. In Fig. 15, a circuit for sending signals, which are output from the wireless IC 21, is also illustrated. At input sections at which sending signals are input from the wireless IC 21, output-section inductors L3 and L4 are provided so as to be connected in series. A matching circuit is constituted by these output-section inductors L3 and L4 and capacitors C5 to C7. Specifically, the impedance (return loss) in the case where the wireless IC device is viewed from the antenna device of the reader/writer is changed by switching between shortening/closing terminals at one side of the output-section inductors L3 and L4 in the interior of the wireless IC 21. The reader/writer detects this change, and accordingly, receives a sending signal from the wireless IC device.

The antenna device 108 includes a first additional resonant circuit LC1 including the antenna coil La, the capacitor Ca, the inductor L2, and the capacitor C2 and a second additional resonant circuit including the inductor L2 and the capacitor C2. Portions other than the wireless IC 21 and the antenna coil La are constituted by a module 23.

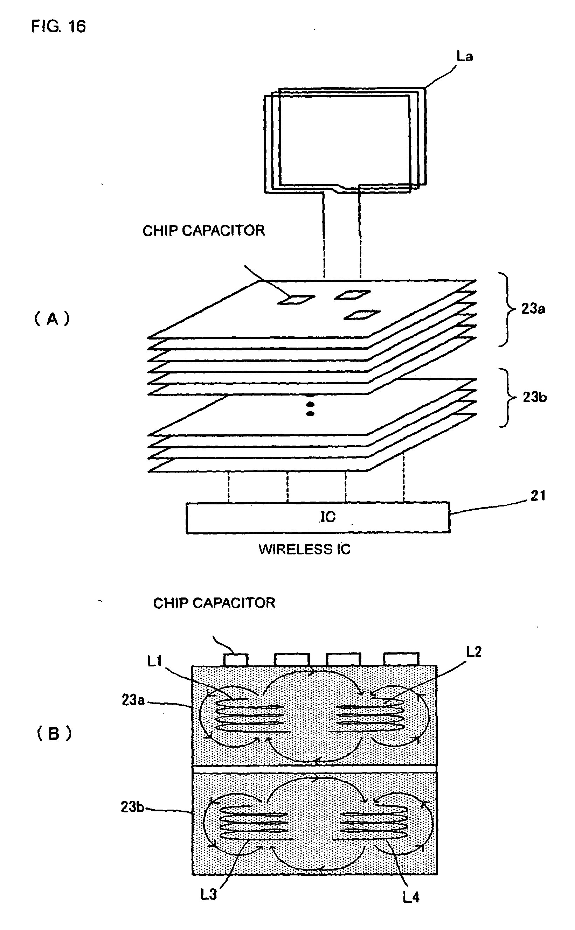

Fig. 16 includes diagrams illustrating the structure of the foregoing module 23 and the structure of the entire wireless IC device 208.
The module 23 is constituted by a multilayer ferrite substrate. In upper layers 23a of the multilayer substrate, the inductors L1 and L2 of the first and second additional resonant circuits are provided. In lower layers 23b of the multilayer substrate, the output-section inductors L3 and L4 are provided. Between the upper layers 23a and the lower layers 23b of the multilayer substrate, a non-magnetic ceramic layer whose relative magnetic permeability µr is substantially 1 is placed in order to block the magnetic coupling.

In the upper layers 23a of the multilayer substrate, the inductors L1 and L2 are magnetically coupled to each other. In the lower layers 23b of the multilayer substrate, the two output-section inductors L3 and L4 are magnetically coupled to each other.

As above, by magnetically coupling L1 and L2, the gap between the resonant frequencies of the two additional resonant circuits can be fixed.

As above, by magnetically shielding the inductors L1 and L2 included in the additional resonant circuits, even when the wireless IC device including this antenna device becomes close to an external device, such as a reader/writer, the magnetic coupling with the antenna coil on the external device side is suppressed. Thus, the inductance values of the inductors L1 and L2 of the additional resonant circuits change only minimally, and the resonant frequencies of the additional resonant circuits can be maintained stable. As a result, the resonant frequency of the antenna resonant circuit becomes more stable.

Chip capacitors corresponding to the capacitors C1, C2, and C5 to C7 in Fig. 15 are provided on the surface or in the interior of the module 23. Furthermore, the wireless IC 21 is provided on the surface or in the interior of the multilayer substrate. Regarding the wireless IC 21, a cavity may be provided in the multilayer substrate, and the wireless IC 21 may be provided in the cavity.

In this way, almost all the necessary components can be constituted by a single module. Therefore, for example, to constitute an RF-ID card, the antenna coil La is formed in the card by using a conductive pattern, and the module 23 is provided in the card, thereby constituting an RF-ID card.

Also, in the case of a cellular phone having an RF-ID function, the antenna coil La may be constituted by a coil electrode placed inside the cellular phone.

## Claims

1. A wireless integrated circuit, IC, device (201; 207, 208) comprising an antenna device (101 - 108) and an IC (21) connected to the antenna device,
wherein the wireless IC device (201; 207, 208) is for performing wireless communication with an external device at a communication frequency, the antenna device comprising:
an antenna resonant circuit (AR) including an antenna coil (La) for sending/receiving a signal using wireless communication with the external device; and
an additional resonant circuit (LC1) in addition to the antenna resonant circuit (AR) and connected to the antenna resonant circuit (AR),
the additional resonant circuit (LC1) including at least an inductor (L1) and having a resonant frequency different from a resonant frequency of the antenna resonant circuit (AR),
**characterized in that**
the additional resonant circuit (LC1) includes a first additional resonant sub-circuit whose resonant frequency is lower than the communication frequency of the wireless IC device (201; 207, 208)
and **in that** the resonant frequency of the antenna resonant circuit (AR) is higher than the communication frequency of the wireless IC device (201; 207, 208).

2. The wireless IC device according to claim 1, wherein the antenna coil (La) and the inductor (L1) included in the additional resonant circuit (LC1) are magnetically coupled to each other.

3. The wireless IC device according to claim 1 or 2, wherein the additional resonant circuit (LC1) is a parallel resonant circuit of the inductor (L1) and a capacitor (C1).

4. The wireless IC device according to any one of claims 1 to 3, wherein the antenna resonant circuit (AR) and the additional resonant circuit (LC1) are connected in series to each other.

5. The wireless IC device according to any one of claims 1 to 4, wherein the additional resonant circuit includes a second additional resonant sub-circuit (LC2) whose resonant frequency is higher than the communication frequency of the wireless IC device (207; 208).

6. The wireless IC device according to claim 5, wherein inductors included in the first and second additional resonant sub-circuits include two adjacent lines having different lengths.

7. The wireless IC device according to claim 1, wherein the inductor (L1) included in the additional resonant circuit (LC1) is magnetically shielded.

8. The wireless IC device according to claim 7, wherein the additional resonant circuit is provided in a multilayer substrate including a magnetic substance.

9. The wireless IC device according to claim 8, comprising an output-section inductor (L3, L4) connected in series to an input section for a sending signal input from the IC (21), the output-section inductor being provided in the multilayer substrate.

10. The wireless IC device according to claim 8 or 9, wherein the additional resonant circuit (LC1) includes a chip capacitor placed on a surface or in an interior of the multilayer substrate.

11. The wireless IC device according to any one of claims 8 to 10, wherein the IC is placed on a surface or in an interior of the multilayer substrate of the antenna device.

## Patentansprüche

1. Ein drahtloses Integrierte-Schaltung-, IC-, Bauelement (201; 207, 208) mit einem Antennenbauelement (101 - 108) und einer IC (21), die mit dem Antennenbauelement verbunden ist,
wobei das drahtlose IC-Bauelement (201; 207, 208) zum Durchführen drahtloser Kommunikation mit einer externen Vorrichtung bei einer Kommunikationsfrequenz dient, wobei das Antennenbauelement folgende Merkmale aufweist:
eine Antennenresonanzschaltung (AR) mit einer Antennenspule (La) zum Senden/Empfangen eines Signals unter Verwendung drahtloser Kommunikation mit der externen Vorrichtung; und
eine zusätzliche Resonanzschaltung (LC1) zusätzlich zu der Antennenresonanzschaltung (AR), die mit der Antennenresonanzschaltung (AR) verbunden ist,
wobei die zusätzliche Resonanzschaltung (LC1) zumindest einen Induktor (L1) umfasst und eine Resonanzfrequenz aufweist, die sich von einer Resonanzfrequenz der Antennenresonanzschaltung (AR) unterscheidet,
**dadurch gekennzeichnet, dass**
die zusätzliche Resonanzschaltung (LC1) eine erste zusätzliche Resonanz-Teilschaltung umfasst, deren Resonanzfrequenz niedriger ist als die Kommunikationsfrequenz des drahtlosen IC-Bauelements (201; 207, 208),
und dadurch, dass die Resonanzfrequenz der Antennenresonanzschaltung (AR) höher ist als die Kommunikationsfrequenz des drahtlosen IC-Bauelements (201; 207, 208).

2. Das drahtlose IC-Bauelement gemäß Anspruch 1, bei dem die Antennenspule (La) und der Induktor (L1), der in der zusätzlichen Resonanzschaltung (LC1) beinhaltet ist, magnetisch miteinander gekoppelt sind.

3. Das drahtlose IC-Bauelement gemäß Anspruch 1 oder 2, bei dem die zusätzliche Resonanzschaltung (LC1) eine parallele Resonanzschaltung des Induktors (L1) und einen Kondensators (C1) ist.

4. Das drahtlose IC-Bauelement gemäß einem der Ansprüche 1 bis 3, bei dem die Antennenresonanzschaltung (AR) und die zusätzliche Resonanzschaltung (LC1) in Serie miteinander geschaltet sind.

5. Das drahtlose IC-Bauelement gemäß einem der Ansprüche 1 bis 4, bei dem die zusätzliche Resonanzschaltung eine zweite zusätzliche Resonanz-Teilschaltung (LC2) umfasst, deren Resonanzfrequenz höher ist als die Kommunikationsfrequenz des drahtlosen IC-Bauelements (207; 208).

6. Das drahtlose IC-Bauelement gemäß Anspruch 5, bei dem Induktoren, die in der ersten und der zweiten zusätzlichen Resonanz-Teilschaltung beinhaltet sind, zwei benachbarte Leitungen mit unterschiedlichen Längen umfassen.

7. Das drahtlose IC-Bauelement gemäß Anspruch 1, bei dem der Induktor (L1), der in der zusätzlichen Resonanzschaltung (LC1) beinhaltet ist, magnetisch abgeschirmt ist.

8. Das drahtlose IC-Bauelement gemäß Anspruch 7, bei dem die zusätzliche Resonanzschaltung in einem Mehrschichtsubstrat vorgesehen ist, das eine magnetische Substanz beinhaltet.

9. Das drahtlose IC-Bauelement gemäß Anspruch 8, das einen Ausgangsabschnitt-Induktor (L3, L4) aufweist, der in Serie geschaltet ist mit einem Eingangsabschnitt für eine Sendesignaleingabe von der IC (21), wobei der Ausgangsabschnitt-Induktor in dem Mehrschichtsubstrat vorgesehen ist.

10. Das drahtlose IC-Bauelement gemäß Anspruch 8 oder 9, bei dem die zusätzliche Resonanzschaltung (LC1) einen Chipkondensator umfasst, der auf einer Oberfläche oder im Inneren des Mehrschichtsubstrats platziert ist.

11. Das drahtlose IC-Bauelement gemäß einem der Ansprüche 8 bis 10, bei dem die IC auf einer Oberfläche oder im Inneren des Mehrschichtsubstrats des Antennenbauelements platziert ist.

## Revendications

1. Dispositif à circuit intégré, IC, sans fil (201 ; 207, 208) comprenant un dispositif d'antenne (101 à 108) et un circuit intégré (21) connecté au dispositif d'antenne,
dans lequel le dispositif à circuit intégré sans fil (201 ; 207, 208) sert à effectuer une communication sans fil avec un dispositif externe à une fréquence de communication, le dispositif d'antenne comprenant :
un circuit résonant d'antenne (AR) comprenant une bobine d'antenne (La) pour envoyer/recevoir un signal en utilisant une communication sans fil avec le dispositif externe ; et
un circuit résonant supplémentaire (LC1) en plus du circuit résonant d'antenne (AR) et connecté au circuit résonant d'antenne (AR),
le circuit résonant supplémentaire (LC1) comprenant au moins une inductance (L1) et ayant une fréquence de résonance différente d'une fréquence de résonance du circuit résonant d'antenne (AR),
**caractérisé en ce que**
le circuit résonant supplémentaire (LC1) comprend un premier sous-circuit résonant supplémentaire dont la fréquence de résonance est inférieure à la fréquence de communication du dispositif à circuit intégré sans fil (201 ; 207, 208),
et **en ce que** la fréquence de résonance du circuit résonant d'antenne (AR) est supérieure à la fréquence de communication du dispositif à circuit intégré sans fil (201 ; 207, 208).

2. Dispositif à circuit intégré sans fil selon la revendication 1, dans lequel la bobine d'antenne (La) et l'inductance (L1) incluse dans le circuit résonant supplémentaire (LC1) sont couplées magnétiquement l'une à l'autre.

3. Dispositif à circuit intégré sans fil selon la revendication 1 ou 2, dans lequel le circuit résonant supplémentaire (LC1) est un circuit résonant parallèle de l'inductance (L1) et d'un condensateur (C1).

4. Dispositif à circuit intégré sans fil selon l'une quelconque des revendications 1 à 3, dans lequel le circuit résonant d'antenne (AR) et le circuit résonant supplémentaire (LC1) sont connectés en série l'un à l'autre.

5. Dispositif à circuit intégré sans fil selon l'une quelconque des revendications 1 à 4, dans lequel le circuit résonant supplémentaire comprend un deuxième sous-circuit résonant supplémentaire (LC2) dont la fréquence de résonance est supérieure à la fréquence de communication du dispositif à circuit intégré sans fil (207 ; 208).

6. Dispositif à circuit intégré sans fil selon la revendication 5, dans lequel les inductances incluses dans les premier et deuxième sous-circuits résonants supplémentaires comprennent deux lignes adjacentes ayant différentes longueurs.

7. Dispositif à circuit intégré sans fil selon la revendication 1, dans lequel l'inductance (L1) incluse dans le circuit résonant supplémentaire (LC1) est blindée magnétiquement.

8. Dispositif à circuit intégré sans fil selon la revendication 7, dans lequel le circuit résonant supplémentaire est prévu dans un substrat multicouche comprenant une substance magnétique.

9. Dispositif à circuit intégré sans fil selon la revendication 8, comprenant une inductance de section de sortie (L3, L4) connectée en série à une section d'entrée pour un signal d'envoi entré à partir du circuit intégré (21), l'inductance de section de sortie étant prévue dans le substrat multicouche.

10. Dispositif à circuit intégré sans fil selon la revendication 8 ou 9, dans lequel le circuit résonant supplémentaire (LC1) comprend un condensateur puce placé sur une surface ou à l'intérieur du substrat multicouche.

11. Dispositif à circuit intégré sans fil selon l'une quelconque des revendications 8 à 10, dans lequel le circuit intégré est placé sur une surface ou à l'intérieur du substrat multicouche du dispositif d'antenne.
